(19) Europäisches Patentamt / European Patent Office / Office européen des brevets

(11) **EP 1 853 891 B1**

(12) **EUROPÄISCHE PATENTSCHRIFT**

(45) Veröffentlichungstag und Bekanntmachung des Hinweises auf die Patenterteilung:
**05.12.2012   Patentblatt 2012/49**

(21) Anmeldenummer: 06707986.3

(22) Anmeldetag: **02.02.2006**

(51) Int Cl.:
***G01M 3/20*** *(2006.01)*

(86) Internationale Anmeldenummer:
**PCT/EP2006/050625**

(87) Internationale Veröffentlichungsnummer:
**WO 2006/092352 (08.09.2006 Gazette 2006/36)**

(54) **LECKSUCHGERÄT MIT SCHNÜFFELSONDE**

LEAK INDICATOR COMPRISING A SNIFFER PROBE

DISPOSITIF DE DETECTION DE FUITES A SONDE RENIFLEUSE

(84) Benannte Vertragsstaaten:
**DE FR GB IT SE**

(30) Priorität: **03.03.2005   DE 102005009713**

(43) Veröffentlichungstag der Anmeldung:
**14.11.2007   Patentblatt 2007/46**

(73) Patentinhaber: Inficon GmbH
**50968 Köln (DE)**

(72) Erfinder:
• **WETZIG, Daniel**
  **50999 Köln (DE)**
• **MEBUS, Stefan**
  **50733 Köln (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**WO-A-03/008923     DE-A1- 19 846 798**

EP 1 853 891 B1

**EP 1 853 891 B1**

**Beschreibung**

Die Erfindung betrifft ein Lecksuchgerät mit Schnüffelsonde, mit einem Hauptgerät, das eine Vakuumpumpe und einen Testgassensor enthält und über eine Schlauchteitung mit der Schnüffelsonde verbunden ist.

In DE 44 45 829 A1 (Leybold AG) ist ein Gegenstrom-Schnüffellecksucher beschrieben, der am Ende eines Schnüffelschlauchs eine Hochvakuumpumpenstufe aufweist. Verwendet wird ein etwa 4 m langer Schnüffelschlauch, der als Kapillarleitung ausgebildet ist und einen Innendurchmesser von etwa 0,4 mm hat. Der Schnüffelschlauch bringt die erforderliche Drosselwirkung auf, um das an seinem Auslassende erzeugte Vakuum aufrecht zu erhalten.

DE OS 24 41 124 beschreibt eine Lecksucheinrichtung mit einem Schnüffelschlauch, bei der der Schlauch einen relativ großen Durchmesser hat. Unmittelbar vor dem Testgassensor, bei dem es sich um ein Massenspektrometer handelt, ist eine Drosselstelle vorgesehen. Dadurch, dass die Drosselstelle unmittelbar vor dem Testgassensor angeordnet ist, kann das zu untersuchende Gas mit Hilfe der Vakuumpumpe schneller vom Einlass der Schnüffelsonde bis unmittelbar vor die Drosselstelle, also bis zum Testgassensor, gefördert werden. Dadurch wird die Ansprechzeit, die von der Länge der Schlauchleitung abhängt, verringert.

Die Anmelderin bietet unter anderem eine Gerätefamilie aus den Geräten ECOTEC und PROTEC an, bei denen es sich um Lecksuchgeräte mit Schnüffelsonde handelt. Beide Geräte unterscheiden sich unter anderem durch den Querschnitt der Kapillarleitung, die die Schnüffelsonde mit dem Hauptgerät verbindet. Der Fluss in der Kapillarleitung entsteht aufgrund der Druckdifferenz zwischen dem Einlass der Schnüffelsonde und dem Austrittsende der Kapillarleitung am Hauptgerät, wo ein Grobvakuum (p<250 mbar) erzeugt wird. Im Hauptgerät wird permanent mit dem Testgassensor der Testgasanteil im Gasstrom bestimmt. Aus der gemessenen Testgaskonzentration und dem Gasfluss wird auf die Leckrate der undichten Stellen geschlossen.

Die Zeit zwischen dem Gaseintritt in die Schnüffelsonde und der Signalanzeige wird - ungeachtet der Ansprechzeit des Testgassensors im Hauptgerät - durch die Laufzeit des Gases durch die Kapillarleitung bestimmt. Diese Zeit bildet die sogenannte Totzeit. Je länger die Kapillarleitung ist umso größer ist die Totzeit des Systems. Bei vorgegebener Kapillarleitungslänge kann die Totzeit durch Änderung der Durchflussgeschwindigkeit beeinflusst werden. Die Durchflussgeschwindigkeit kann wiederum mit dem Leitungsquerschnitt und der Druckdifferenz zwischen Eintritts- und Austrittsende der Kapillarleitung verändert werden.

Es ist erstrebenswert, den Fluss in die Schnüffelsonde möglichst groß zu wählen, so dass die Totzeit minimal wird und auch aus größerer Entfernung noch Luft in ausreichender Menge in die Schnüffelsonde aufgenommen wird. Die Konzentration c des Testgases, die sich im Gasstrom der eingesogenen Luft einstellt, ist durch folgende Gleichung gegeben:

$$c = \frac{L}{q_{pV}}$$

Hierin sind c die Konzentration des Testgases, L die Leckrate und $q_{pv}$ der Gasstrom durch die Kapillarleitung.

Die kleinste nachweisbare Leckrate entspricht der kleinsten detektierbaren Testgaskonzentration. Somit verschlechtert sich die kleinste nachweisbare Leckrate mit zunehmendem Gasfluss in die Schnüffelsonde. Entsprechend ist der gewählte Durchfluss immer ein Kompromiss zwischen den Randbedingungen minimaler Totzeit und kleinster nachweisbarer Leckrate.

Der Erfindung liegt die Aufgabe zugrunde, ein Lecksuchgerät mit Schnüffelsonde zu schaffen, das es ermöglicht, den optimalen Gasfluss zu der jeweiligen Anwendung wählen zu können, ohne die Schlauchleitung wechseln zu müssen.

Das Lecksuchgerät der vorliegenden Erfindung ist durch den Patentanspruch 1 bestimmt. Hiernach enthält die Schlauchleitung, die die Schnüffelsonde mit dem Hauptgerät verbindet, mindestens zwei Kapillarleitungen, die im Hauptgerät oder in der Schnüffelsonde selektiv verschließbar sind.

Durch gezieltes Öffnen eines oder mehrerer Ventile kann diejenige Kapillarleitung ausgewählt werden, über die Luft angesaugt wird. Wenn die Kapillarleitungen unterschiedliche Innenquerschnitte haben, kann auf diese Weise der gewünschte Gasdurchsatz erreicht werden mit der Folge, dass auch die Totzeit entsprechend verändert werden kann. Infolge der variablen Schlauchleitung oder Schnüffelleitung besteht auch die Möglichkeit, Geräte, die unterschiedlichen Anforderungen entsprechen, mit der gleichen Schnüffelleitung auszustatten, wie beispielsweise die genannten Geräte ECOTEC und PROTEC der Anmelderin. Vorzugsweise haben sämtliche Kapillarleitungen unterschiedliche Querschnitte.

Die Erfindung ermöglicht es, zwei verschiedene Gerätetypen, die mit unterschiedlichen Gasdurchsätzen arbeiten, in Kombination mit derselben Schlauchleitung zu verwenden. Die Schlauchleitung hat zwei Kapillarleitungen. Im Hauptgerät wird nur diejenige Leitung weitergeführt, deren Gasdurchsatz zu dem betreffenden Hauptgerät passt, während die jeweils andere Kapillarleitung unbenutzt bleibt. So kann eine Schnüffelleitung für zwei mit verschiedenen Gasdurchsätzen arbeitende Geräte eingesetzt werden, ohne dass Ventile im Hauptgerät vorhanden sind.

Es besteht auch die Möglichkeit, gleiche Kapillarleitungen zu verwenden und durch Umschalten von Ventilen die Zahl der durchlässigen Kapillarleitungen festzulegen. In jedem Fall können variierende Durchflüsse mit derselben Schlauchleitung realisiert werden. Im Hauptgerät werden mit Ventilen die jeweiligen Kapillarleitungen geöffnet, deren Querschnitt den gewünschten Gasdurchsatz ermöglicht. An den nicht genutzten Kapillarleitungen ist die Druckdifferenz zwischen Einlass und Auslass annähernd O mbar, so dass die an der Schnüffelsonde offenen Kapillarleitungen den Gasfluss nicht beeinflussen.

Mit einer Vergrößerung des Gasdurchsatzes wird neben der Verringerung der Totzeit auch eine Erhöhung der Abstandsempfindlichkeit der Schnüffelsonde erreicht.

Ein wesentlicher Vorteil der Erfindung besteht darin, dass der Anwender, wenn er den Gasstrom an die Messsituation anpassen möchte, die Schlauchleitung nicht wechseln muss. Die Umschaltung erfolgt im Hauptgerät durch Betätigung der Ventilvorrichtung, die aus den einzelnen Ventilen besteht. Eine der Kapillarleitungen kann auch dazu verwendet werden, eine verstopfte Schnüffelsonde vom Hauptgerät aus mit Druckluft zu versorgen und dadurch frei zu blasen. Schließlich besteht die Möglichkeit, denselben Typ von Schlauchleitung für eine Gerätefamilie zu verwenden, bei der die Geräte mit unterschiedlichen Gasdurchsätzen arbeiten.

Vorzugsweise sind die Ventile im Hauptgerät angeordnet. Allerdings besteht auch die Möglichkeit, die Ventile am entgegengesetzten Ende, also in der Schnüffelsonde, unterzubringen.

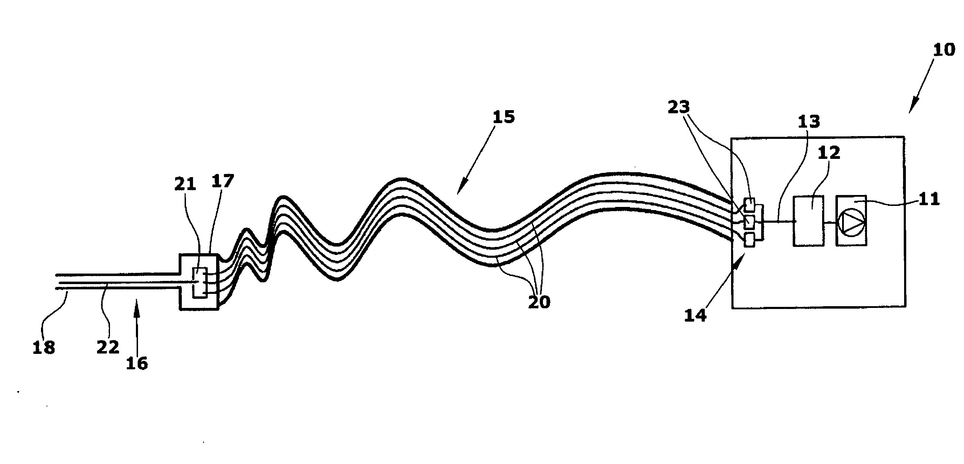

Im Folgenden wird unter Bezugnahme auf die einzige Figur der Zeichnung ein Ausführungsbeispiel der Erfindung näher erläutert.

In der Zeichnung ist ein Lecksuchgerät nach der Erfindung schematisch dargestellt.

Das Lecksuchgerät weist ein Hauptgerät 10 auf, das diejenigen Komponenten enthält, die bei der Schnüffellecksuche nicht bewegt werden müssen. Das Hauptgerät 10 ist als Tischgerät oder Standgerät ausgebildet. Es enthält unter anderem eine Vakuumpumpe 11 und einen Testgassensor 12. Als Testgassensor kann ein Massenspektrometer oder ein Infrarot-Gasanalysator dienen. Die Vakuumpumpe 11 saugt die Luft durch den Testgassensor 12 hindurch. Der Einlass 13 des Testgasdetektors ist über eine Ventilvorrichtung 14 mit einer flexiblen Schlauchleitung 15 verbunden. Die Schlauchleitung, die eine Länge von mehreren Metern haben kann, führt zu der Schnüffelsonde 16. Die Schnüffelsonde 16 ist ein Handgerät mit einem Handgriff 17 und einem Schnüffelrohr 18. Sie kann pistolenförmig ausgebildet sein.

Die Schlauchleitung 15 enthält mehrere Kapillarleitungen 20, die in der Schnüffelsonde 16 mit einem Leitungsblock 21 verbunden sind. Der Leitungsblock 21 enthält eine Kammer, in die eine durch das Schnüffelrohr 18 führende Eingangsleitung 22 mündet. Die Eingangsleitung 22 verzweigt sich also im Leitungsblock 21 zu den einzelnen Kapillarleitungen 20, die selektiv absperrbar sind.

Zum Absperren der Kapillarleitungen dient die Ventilvorrichtung 14. Diese besteht aus mehreren Ventilen 23, von denen jedes für eine der Kapillarleitungen vorgesehen ist. Die Ventile 23 sind vorzugsweise Magnetventile, die elektrisch gesteuert werden. Es besteht aber auch die Möglichkeit, handbetätigte Ventile einzusetzen. Die Ventile sind Schaltventile, die zwischen Durchlasszustand und Sperrzustand umschaltbar sind.

Bei dem vorliegenden Ausführungsbeispiel haben die Kapillarleitungen 20 unterschiedliche Innenquerschnitte und die Ventilvorrichtung 14 ist derart betätigbar, dass jeweils nur maximal ein Ventil 23 geöffnet ist.

Bei der Schnüffellecksuche befindet sich in dem Prüfobjekt, beispielsweise einem Behälter, ein Testgas. Als Testgas wird häufig Helium eingesetzt, das vor dem Verschließen der auf Lecks zu untersuchenden Hohlräume darin eingebracht wird. Das Testobjekt wird dann mit Hilfe der Schnüffelsonde 16 abgetastet. Die Eingangsleitung 22 nimmt das aus einem eventuell vorhandenen Leck ausströmende Testgas auf, das in das Hauptgerät 10 geführt und dort analysiert wird.

In einem Beispielfall hat die Schlauchleitung 15 eine Länge von 5 m. Sie enthält drei Kapillarleitungen mit den Querschnitten 0,6 mm, 0,7 mm und 0,8 mm. Eine derartige Schlauchleitung, kann wahlweise mit den Gasflüssen 110 sccm, 200 sccm oder 350 sccm betrieben werden.

**Patentansprüche**

1. Lecksuchgerät mit Schnüffelsonde (16), mit einem Hauptgerät (10), das eine Vakuumpumpe (11) und einen Testgassensor (12) enthält und über eine Schlauchleitung (15) mit der Schnüffelsonde (16) verbunden ist,
   **dadurch gekennzeichnet,**
   **dass** die Schlauchleitung (15) mindestens zwei Kapillarleitungen (20) enthält, die im Hauptgerät (10) oder in der Schnüffelsonde (16) selektiv verschließbar sind.

2. Lecksuchgerät nach Anspruch 1, **dadurch gekennzeichnet, dass** die Kapillarleitungen unterschiedliche Querschnitte haben.

3.  Lecksuchgerät nach Anspruch 1 oder 2, **dadurch gekennzeichnet, dass** im Hauptgerät (10) Ventile (23) angeordnet sind, die selektiv verschließbar sind.

4.  Lecksuchgerät nach Anspruch 1 oder 2, **dadurch gekennzeichnet, dass** die Ventile an der Schnüffelsonde (16) angeordnet sind.

5.  Lecksuchgerät nach einem der Ansprüche 1 bis 4, **dadurch gekennzeichnet, dass** die Kapillarleitungen (20) in der Schnüffelsonde (16) mit einem gemeinsamen Leitungsblock (21) verbunden sind, in den eine Eingangsleitung (22) mündet.

6.  Lecksuchgerät nach einem der Ansprüche 1 bis 5, **dadurch gekennzeichnet, dass** die Schlauchleitung (15) lösbar an dem Hauptgerät (10) angebracht ist und dass das Hauptgerät (10) eine Anschlussvorrichtung für die Schlauchleitung aufweist, die nur eine ausgewählte Kapillarleitung weiterführt, deren Gasdurchsatz zu dem jeweiligen Hauptgerät passt.

7.  Lecksuchgerät nach Anspruch 3, **dadurch gekennzeichnet, dass** die Ventile (23) derart betätigbar sind, dass jeweils nur maximal ein Ventil geöffnet ist.

8.  Lecksuchgerät nach Anspruch 3, **dadurch gekennzeichnet, dass** die Ventile (23) in wählbaren Kombinationen gruppenweise parallel zu öffnen sind.


**Claims**

1.  A leak detector having a sniffing probe (16) and comprising a main device (10) which includes a vacuum pump (11) and a test gas sensor (12) and is connected with said sniffing probe (16) via a hose line (15),
    **characterized in**
    **that** said hose line (15) comprises at least two capillary tubes (20) which are adapted to be selectively closed in said main device (10) or said sniffing probe (16).

2.  The leak detector according to claim 1, **characterized in that** the capillary tubes have different cross sections.

3.  The leak detector according to claim 1 or 2, **characterized in that** in the main device (10) valves (23) are arranged which are adapted to be selectively closed.

4.  The leak detector according to claim 1 or 2, **characterized in that** said valves are arranged at the sniffing probe (16).

5.  The leak detector according to any one of claims 1 to 4, **characterized in that** the capillary tubes (20) are connected with a common line block (21) in the sniffing probe (16), with an inlet line (22) leading into said line block.

6.  The leak detector according to any one of claims 1 to 5, **characterized in that** the hose line (15) is removably attached to the main device (10), and that the main device (10) comprises a connecting device for said hose line in which only one selected capillary tube is open whose gas flow is suitable for the respective main device.

7.  The leak detector according to claim 3, **characterized in that** the valves (23) are adapted to be operated such that only one valve at maximum is open at a time.

8.  The leak detector according to claim 3, **characterized in that** the valves (23) are adapted to be opened in parallel in groups composed of selectable combinations.


**Revendications**

1.  Dispositif de détection de fuites à sonde renifleuse (16), comprenant une unité principale (10) qui comporte une pompe à vide (11) et un détecteur de gaz d'essai (12) et est reliée à la sonde renifleuse (16) via un conduit flexible (15),
    **caractérisé en ce que**
    le conduit flexible (15) contient au moins deux conduits capillaires (20) qui peuvent être fermés sélectivement dans l'unité principale (10) ou dans la sonde renifleuse (16).

**2.** Dispositif de détection de fuites selon la revendication 1, **caractérisé en ce que** les conduits capillaires présentent différentes sections transversales.

**3.** Dispositif de détection de fuites selon la revendication 1 ou 2, **caractérisé en ce que** sont disposées dans l'unité principale (10) des valves (23) aptes à être sélectivement fermées.

**4.** Dispositif de détection de fuites selon la revendication 1 ou 2, **caractérisé en ce que** les valves sont disposées au niveau de la sonde renifleuse (16).

**5.** Dispositif de détection de fuites selon l'une des revendications 1 à 4, **caractérisé en ce que** les conduits capillaires (20) dans la sonde renifleuse (16) sont reliés à un bloc de conduits (21) commun dans lequel débouche un conduit d'entrée (22).

**6.** Dispositif de détection de fuites selon l'une des revendications 1 à 5, **caractérisé en ce que** le conduit flexible (15) est disposé de façon amovible sur l'unité principale (10) et **en ce que** l'unité principale (10) comporte un dispositif de raccordement du conduit flexible, qui ne prolonge qu'un conduit capillaire sélectionné dont le débit de gaz correspond à l'unité principale respective.

**7.** Dispositif de détection de fuites selon la revendication 3, **caractérisé en ce que** les valves (23) peuvent être actionnées de telle sorte qu'au maximum une seule valve soit ouverte.

**8.** Dispositif de détection de fuites selon la revendication 3, **caractérisé en ce que** les valves (23) doivent être ouvertes parallèlement par groupes dans des combinaisons sélectionnables.

EP 1 853 891 B1

**IN DER BESCHREIBUNG AUFGEFÜHRTE DOKUMENTE**

**In der Beschreibung aufgeführte Patentdokumente**

- DE 4445829 A1
- DE OS2441124 A